# EUROPÄISCHE PATENTANMELDUNG

(11) **EP 0 522 377 A1**
(43) Veröffentlichungstag der Anmeldung: **13.01.1993**
(21) Anmeldenummer: 92110876.7
(22) Anmeldetag: 26.06.1992
(51) Int. Cl.: G05B 19/23, G01D 5/245

(54) **Positionssensor für Linearmotoren**

(30) Priorität: 10.07.1991 DE 4122769
(71) Anmelder: IEF WERNER GMBH, D-78120 Furtwangen (DE)
(72) Erfinder: Werner, Robert, W-7743 Furtwangen (DE); Bär, Manfred, W-7741 Vöhrenbach (DE); Werner, Matthias, W-7743 Furtwangen (DE)
(74) Vertreter: Westphal, Klaus, Dipl.-Ing.

(57) **Zusammenfassung**

Vorrichtung zur Positionsbestimmung bei Linearmotoren, insbesondere bei x-y Linearmotoren, mit Hilfe eines auf dem Motorläufer angebrachten Sensors, der die periodische Struktur der Rasterung des Stators während der Bewegung des Motorläufers in eine Spannungsänderung umformt. Aus dem Spannungssignal läßt sich die tatsächlich zurückgelegte Anzahl der Grundperioden der Rasterung bestimmen. Eine elektronische Schaltung vergleicht die tatsächlich durchgeführte Anzahl der zurückgelegten Grundperioden mit der Anzahl der Stromimpulse für den Linearmotor und veranlaßt eine Korrekturbewegung, falls diese beiden nicht übereinstimmen.

## Beschreibung

Die Erfindung betrifft einen Positionssensor für Linearmotoren, insbesondere für x-y Linearmotoren der im Oberbegriff des Anspruchs 1 angegebenen Art. Linearmotoren werden heute dazu verwendet, um kleine leichte Einheiten, wie z. B. Greifer zum Bestücken, schnell zu bewegen und genau zu positionieren. Durch die möglichen hohen Beschleunigungen und Endgeschwindigkeiten ergibt sich eine Vielzahl von Anwendungsmöglichkeiten in der Fertigung und Produktion.

Linearmotoren weisen gegenüber herkömmlichen Drehmotoren erhebliche Vorteile auf. Sie benötigen keine Antriebskupplung und keine Schmierung. Bei der berührungsfreien Bewegung gibt es keine Funkenbildung und es entsteht kein Abrieb, was vor allem für die Verwendung in Reinräumen von großer Wichtigkeit ist. Die Bewegung eines Linearmotors erfolgt in diskreten Schritten analog der eines Schrittmotors. Ein Motorläufer wird durch einen Stromimpuls auf einer als Stator dienenden Grundplatte mit einer periodischen Rasterung um einen diskreten Schritt weiterbewegt. Die Schrittweite entspricht gerade einer Grundperiode der Rasterung. Durch eine Folge von Stromimpulsen kann der Motorläufer an eine bestimmte Position gefahren werden. Wesentlicher Nachteil dabei ist, daß nicht jeder Stromimpuls unbedingt zu einer Weiterbewegung führt. Es kann zu Schrittverlusten und damit zu falschen Endpositionen kommen. Häufig treten Schrittverluste bei Beschleunigung und Abbremsung auf, wenn die Geschwindigkeitsänderung nicht der Last angepaßt ist. Außerdem kann es bei einer Kollision mit einem Gegenstand im Arbeitsraum zu Schrittverlusten kommen. Wird der Schrittverlust nicht an die Steuerung gemeldet, so fährt der Motor eine falsche Position an. Deshalb ist es notwendig, die Endposition des Motorläufers genau zu bestimmen. Dies kann entweder über eine Entfernungsmessung oder über die Messung des Verfahrweges erfolgen.

Aus der DE 31 48 007 C2 ist ein Linearmotor mit einer Einrichtung, bei dem die Arbeit eines Linearmotors durch eine elektrische Abtasteinrichtung gesteuert wird, bekannt. Dabei wird ein periodisches Signal zur Positionsbestimmung herangezogen. Weiter ist aus der US-PS 3 585 376 ein Positioniersystem bekannt, bei dem mit Hilfe eines Korrekturverfahrens Fehler in der Impulsfolge, die bei der Steuerung von Antrieben verschiedener Art auftreten, durch Addition bzw. Substraktion einzelner Impulse ausgeglichen werden. Der Entfernungsmessung können auch Infrarot-Meßgeräte oder optische Systeme, wie z.B. Laserinterferometer dienen. Alle diese Möglichkeiten sind jedoch entweder sehr kostspielig oder sie benötigen einen hohen Justieraufwand oder sie sind mechanisch anfällig. Weiter ist die Störanfälligkeit von Infrarot-Meßgeräten ein erheblicher Nachteil. Diese Nachteile bestehen schon für Linearmotoren mit nur einer Bewegungsrichtung. Für x-y Linearmotoren sind diese Nachteile noch schwerwiegender.

Der Erfindung liegt die Aufgabe zugrunde, einen Positionssensor der o.g. Art zu schaffen, der die vorliegende Rasterung zur Positionsbestimmung ausnützt, äußerst zuverlässig arbeitet, keinen Justieraufwand benötigt und kostengünstig herzustellen ist.

Diese Aufgabe wird erfindungsgemäß durch die im Anspruch 1 angegebenen kennzeichnenden Merkmale gelöst.

Die Grundidee der Erfindung besteht darin, den durch den Motorläufer zurückgelegten Weg durch einen elektromagnetischen Sensor, z. B. Hallsensor, Feldplattensensor, Reflexionslichtschrankensensor, in Einheiten der Grundperiode der Rasterung zu messen, mit den in der gleichen Einheit durch die Anzahl der Stromimpulse vorgegebenen Wegdifferenz zu vergleichen und in einer elektronischen Schaltung gegebenenfalls zu korrigieren.

Nachstehend sind die Sensor-Signalaufnahme und die Signalverarbeitung aus Gründen der Übersicht nur für die Bewegung in x-Richtung anhand schematischer Zeichnungen näher beschrieben. Es zeigen:
- Figur 1 -: schematische Darstellung einer Vorrichtung zur Sensor-Signalaufnahme (x-Richtung) und
- Figur 2 -: Blockschaltbild der Anordnung zur Signalverarbeitung (x-Richtung).

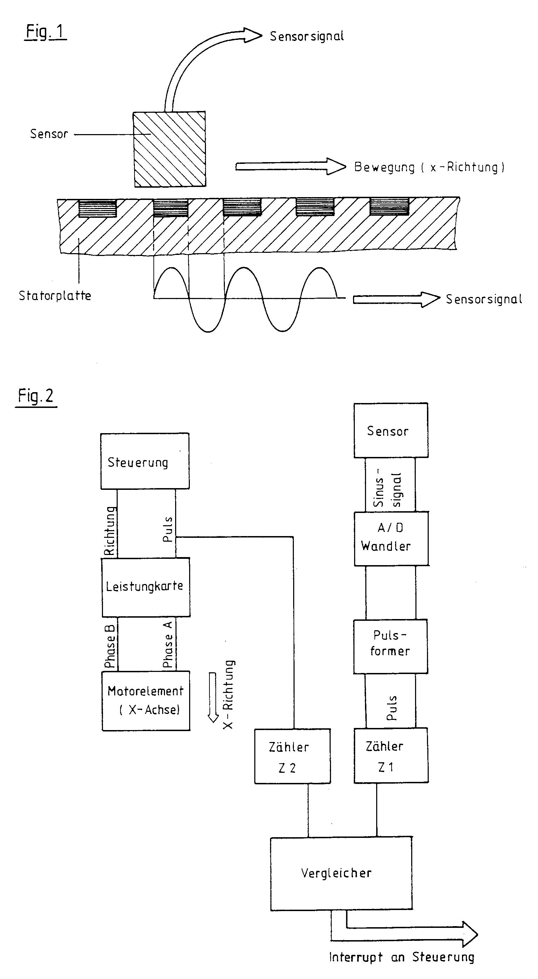

Figur 1 zeigt in schematischer Darstellung eine Vorrichtung zur Aufnahme des Sensorsignales während der Bewegung in x-Richtung über die Statorplatte. Die Statorplatte weist eine periodische Rasterung aus rechteckigen Stegen und Vertiefungen auf. Über der Statorplatte bewegt sich der Motorläufer mit dem Sensor. Die Motorplatte ist in der Zeichnung nicht skizziert. Der Sensor wandelt während der Bewegung die periodische Ortsstruktur in eine Spannungsänderung um. Trägt man dieses Sensorsignal nicht als Funktion der Zeit sondern als Funktion des Ortes auf, so erhält man die gleiche Periodizität, wie sie die Rasterung der Statorplatte aufweist.

Anhand des Blockschaltbildes gem. Fig. 2 ist dargestellt, wie aus dem Spannungssignal die Anzahl der vom Motorläufer überstrichenen Grundperioden ermittelt wird. Die durch den Sensor während der Bewegung des Motorläufers über die Statorplatte aufgenommenen Spannungsänderungen werden einem A/D-Wandler zugeführt. Der Signalausgang des A/D-Wandlers ist über einen Pulsformer mit dem Signaleingang eines Zählers Z1 verbunden. Parallel dazu werden die Stromimpulse der Steuerung in einem Zähler Z2 aufaddiert. Die Zählerinhalte Z1 und Z2 werden einem Vergleicher zugeführt und geben ein Interrupt-Signal an die Steuerung. Die Steuerung liefert zwei Signale, einen Puls für die Fortschreitung des Schrittmotors und ein Pegel für die Bewegungsrichtung. Beide Signale werden über eine Leistungskarte an das Motorelement weitergeleitet und führen zu einem zusätzlichen Verfahren des Motors, wodurch aufgetretene Schrittverluste ausgeglichen werden.

## Patentansprüche

1. Vorrichtung zur Positionsbestimmung eines x-y Linearmotores mit einer massiven thermostabilen Grundplatte mit periodischer Rasterung aus rechteckigen Stegen und Vertiefungen als Stator, einem Motorläufer, einer x-y Linearmotor-Steuerung und mindestens einem elektromagnetischen Sensor, dadurch gekennzeichnet, daß der elektromagnetische Sensor fest auf dem Motorläufer angebracht ist und während der Bewegung des Motorläufers die periodische Ortsstruktur der Rasterung in eine zeitliche Spannungsänderung transformiert, daß aus dieser Spannungsänderung die Anzahl der vom Motorläufer überstrichenen Grundperioden der Rasterung in x- bzw. y-Richtung elektronisch ermittelt und in einem ersten elektronischen Zähler (Z1) registriert wird, daß in einem zweiten elektronischen Zähler (Z2) die Anzahl der Schrittmotorimpulse für die entsprechende Richtung registriert wird, daß in einer elektronischen Schaltung die beiden Zählerinhalte verglichen werden und daß der Linearmotor um die Anzahl der Differenzschritte (Z2 - Z1) weiter in die entsprechende Richtung verfahren wird.
